# DEMANDE DE BREVET EUROPEEN

(11) **EP 4 199 294 A1**
(43) Date de publication de la demande: **21.06.2023**
(21) Numéro de dépôt: 22212623.7
(22) Date de dépôt: 09.12.2022
(51) Int. Cl.: H02J 3/38, H02J 5/00, H02J 1/10, H02J 3/36

(54) **ARCHITECTURE ÉLECTRIQUE COMPRENANT AU MOINS UNE INSTALLATION PHOTOVOLTAÏQUE LINÉAIRE CONSTITUÉE DE PLUSIEURS GROUPES DE PANNEAUX PHOTOVOLTAÏQUES ET D'UN RÉSEAU DE COURANT CONTINU (DC), RELIÉE À UN RÉSEAU DE TRANSPORT ET/OU DE DISTRIBUTION ALTERNATIF (AC) AVEC ARBITRAGE DE LA PUISSANCE INJECTÉE DEPUIS LE RÉSEAU DC AU RÉSEAU AC**

(30) Priorité: 20.12.2021 FR 2114042
(71) Demandeur: COMMISSARIAT A L'ENERGIE ATOMIQUE ET AUX ENERGIES ALTERNATIVES, 75015 Paris (FR)
(72) Inventeur: TRAN, Quoc-Tuan, 38054 GRENOBLE CEDEX 09 (FR)
(74) Mandataire: Cabinet Nony

(57) **Abrégé**

L'invention consiste essentiellement à mettre en place une architecture avec au moins une installation linéaire PV avec un réseau DC et d'interconnecter ce sous-ensemble en au moins deux points distincts d'interconnexion avec un réseau électrique AC de préférence existant. Chaque point d'interconnexion à un nœud du réseau AC est un convertisseur en source de tension VSC qui peut injecter de 0 à 100% de la puissance maximale P des installations linéaires PV.

## Description

### Domaine technique

La présente invention concerne le domaine général des réseaux électriques.

L'invention a plus particulièrement trait à l'interconnexion entre un réseau de transport et/ou de distribution alternatif (AC) et au moins une installation photovoltaïque linéaire

Par « installation linéaire PV », on entend ici et dans le cadre de l'invention, des panneaux photovoltaïques agencés par groupes selon une surface qui s'étend principalement selon une ligne et de préférence sur ou le long de sols déjà construits/aménagés par l'homme, comme les pistes cyclables, les bordures d'autoroute, les voies ferrées...ou naturels, par exemple non utilisables à des fins agricoles.

Dans l'ensemble de la demande on utilise les acronymes suivantes à des fins de simplicité :
AC : acronyme anglo-saxon de « Alternative Current » qui désigne le courant alternatif (AC);
DC : acronyme anglo-saxon de « Direct Current » qui désigne le courant continu (CC) ;
MVDC : acronyme anglo-saxon de «Médium Voltage Direct Current» qui désigne le courant continu de moyenne tension, typiquement dans la gamme de 30 à 150 kilovolts (kV) ;
HVDC : acronyme anglo-saxon de « High Voltage Direct Current» qui désigne le courant continu de haute tension, typiquement au-delà de 150 kilovolts (kV) ;
VSC: acronyme anglo-saxon de « Voltage Source Converter» qui désigne un convertisseur fonctionnant en source de tension ;
MMC: acronyme anglo-saxon de « Modular Multi-Level Converter» qui désigne un convertisseur à modules multi-étage.

### Technique antérieure

Le contexte de forte demande en énergies renouvelables (EnR) avec la nécessité d'un réseau électrique dédié, typiquement jusqu'à 30% en 2030 en France et d'expansion de la part du solaire dans les EnR, nécessite d'installer de nombreuses centrales solaires photovoltaïques (PV) au sol, de grandes puissances, typiquement de l'ordre de quelques centaines MW chacune.

La question des terrains disponibles pour cette technologie PV devient donc cruciale. En effet, au regard des surfaces requises, le déploiement des grandes centrales solaires PV au sol peut engendrer des conflits d'usage avec les terres agricoles et affecter la biodiversité. Par exemple, la centrale solaire PV la plus puissante en France à ce jour, d'une puissance égale à 300 MW, est implantée à Cestas, près de Bordeaux, sur 260 hectares.

Trouver de nouveaux terrains pour développer des projets de centrale solaires PV est donc devenu la principale préoccupation des développeurs d'énergies EnR.

De plus, devant la volonté des autorités publiques de limiter l'usage de grands espaces agricoles pour la réalisation de telles centrales PV au sol, des alternatives écologiquement acceptables doivent être trouvées.

Une solution qui répond à cette problématique consiste à profiter de surfaces dites linéaires, sous forme des sols déjà aménagés/construits par l'homme, comme les pistes cyclables, les bordures d'autoroute, les voies ferrées...ou naturels, non utilisables à des fins agricoles, comme le long des cours d'eau et qui s'étendent sur des dizaines, voire des centaines de kilomètres, pour installer des systèmes PV de fortes puissances. Ces surfaces potentielles ont pour avantages d'être déjà très présentes, exploitables directement en l'état pour y installer des panneaux PV et pas chères puisque ne nécessitant pas l'acquisition de terrains.

La mise en place de nouveaux types d'installations/centrales PV linéaires va donc ouvrir de nouvelles opportunités dans la stratégie de développement du PV. Dans le monde, il existe déjà quelques projets d'installation PV linéaires, mais qui sont à priori de petite puissance, typiquement quelques kW. De plus, très peu d'articles sur la conception de ces installations PV linéaires ont été publiés.

Or, passer de centrales PV occupant des dizaines ou centaines d'hectares à des installations PV linéaires s'étendant sur des dizaines d'hectomètres ou kilomètres implique de repenser toute l'architecture du réseau électrique afférente.

De manière générale, les stratégies de l'Union Européenne en matière de développement d'énergies EnR à grande échelle mettent en évidence les rôles importants de l'infrastructure électrique et le couplage sectoriel, i.e. l'interconnexion entre le gaz et l'électricité, pour parvenir à une décarbonation profonde de l'économie.

Il existe donc un besoin de proposer une solution technique optimisée d'architecture électrique qui permette le raccordement massif des installations PV linéaires à l'infrastructure électrique existante.

Le but de l'invention est donc de répondre au moins en partie à ce besoin.

### Exposé de l'invention

Pour ce faire, l'invention concerne, sous l'un de ses aspects, une architecture électrique comprenant :
- au moins une installation linéaire comprenant au moins un groupe de panneaux photovoltaïques (PV), adaptée pour produire une puissance totale maximale P, et
   un réseau de courant continu (DC) comprenant au moins un bus auquel sont connectées en parallèle électrique le(s) groupes de panneaux PV par l'intermédiaire chacun d'un convertisseur DC/DC,
- un réseau de transport et/ou de distribution alternatif (AC),
- au moins deux convertisseurs en source de tension (VSC),un des deux convertisseurs reliant le bus DC à un premier noeud du réseau AC, l'autre des deux convertisseurs reliant le bus DC à un deuxième noeud du réseau AC, distinct du premier noeud, chacun des convertisseurs VSC étant adapté pour injecter de 0 à 100% de la puissance P dans le réseau AC,
- un système de contrôle adapté pour répartir l'injection de puissance entre les convertisseurs VSC en fonction des besoins et/ou des régimes de fonctionnement du réseau AC, de sorte à réduire les pertes totales de ce dernier et/ou d'améliorer la qualité de service du réseau AC, c'est-à-dire d'améliorer la capacité à répondre aux besoins du réseau AC.

Les modes de contrôle possibles des convertisseurs VSC sont:
- Vac/f : Contrôle de la tension au point de connexion et de la fréquence du réseau AC
- Vac-phi : Contrôle de la tension au point de connexion du réseau AC et du déphasage
- Vdc-phi : Contrôle de la tension du bus DC et du déphasage
- Vdc-Q : Contrôle de la tension du bus DC et de puissance réactive
- PWM-phi : Contrôle de la modulation PWM de l'onduleur VSC et du déphasage
- P-Vac : Contrôle de puissance injectée et de la tension au point de connexion du réseau AC
- P-Q : Contrôle de puissance active et réactive injectées au réseau AC
- Vdc-Vac : Contrôle de la tension du bus DC et de la tension au point connecté du réseau AC
- P-cos(f) : Contrôle de puissance active injectée au réseau AC et du facteur de puissance
- Vdc-cos(f) : Contrôle de la tension au bus DC et du facteur de puissance...

Parmi tous ces modes de contrôle, les modes de contrôles P-Q ; P-Vac sont privilégiés pour la fonction de répartition d'injection de la puissance selon l'invention.

Avantageusement, les convertisseurs VSC sont des convertisseurs modulaires multiniveaux (MMC).

Selon une configuration avantageuse, le bus auquel sont directement connectés en parallèle électrique le(s) groupe(s) de panneaux PV est un bus de moyenne tension en courant continu (MVDC).

Selon une variante de réalisation avantageuse, l'architecture comprend plusieurs charges réparties géographiquement, telles que des stations de recharge de véhicules électriques à grande puissance ou des électrolyseurs pour l'alimentation de véhicules fonctionnant à l'hydrogène, reliées chacune par l'intermédiaire d'un convertisseur DC/DC au bus MVDC.

Selon une autre variante de réalisation avantageuse, l'architecture comprend plusieurs moyens de stockage électrique répartis géographiquement, tels que des batteries, reliés chacun par l'intermédiaire d'un convertisseur DC/DC au bus MVDC.

Selon une autre variante de réalisation avantageuse, l'architecture comprend d'autres sources de courant réparties géographiquement, telles que des éoliennes, reliées chacune par l'intermédiaire d'un convertisseur DC/DC au bus MVDC.

Selon un mode de réalisation avantageux, le réseau DC de l'installation linéaire comprend au moins un bus de haute tension en courant continu (HVDC) relié au bus de moyenne tension en courant continu (MVDC) et à un convertisseur en source de tension (VSC) relié à un noeud du réseau AC.

Le système de contrôle peut avantageusement être connecté au système de contrôle et d'acquisition de données en temps réel (SCADA) du réseau AC. Cela permet d'identifier les besoins et/ou des régimes de fonctionnement du réseau AC, de sorte à différencier la puissance d'injection à répartir entre les au moins deux noeuds d'injection afin de réduire les pertes totales du réseau AC ou contribuer à sa qualité de service.

Selon un autre mode de réalisation avantageux, l'architecture comprend des moyens de mesure de tension et/ou de fréquence aux premier et deuxième noeuds, reliés au système de contrôle de sorte que qu'il répartisse l'injection de puissance entre les convertisseurs VSC en fonction des mesures effectuées.

Ainsi, l'invention consiste essentiellement à mettre en place une architecture avec au moins une installation linéaire PV avec un réseau DC et d'interconnecter ce sous-ensemble en au moins deux points distincts d'interconnexion avec un réseau électrique AC de préférence existant. Chaque point d'interconnexion à un noeud du réseau AC est un convertisseur en source de tension VSC qui peut injecter de 0 à 100% de la puissance maximale P des installations linéaires PV.

L'invention consiste donc à arbitrer l'injection de l'électricité produite par les installations linéaires PV entre ces deux (ou plus) points d'interconnexion VSC qui constituent donc des points d'injection aux noeuds du réseau AC afin de réduire les pertes totales du réseau AC et ce en tenant compte des besoins et/ou des régimes de fonctionnement de ce dernier.

Contrairement à une centrale PV selon l'état de l'art qui est localisée en un point précis du réseau électrique et donc en capacité d'injecter seulement en ce point, l'architecture selon l'invention avec une installation linéaire PV répartie sur une grande étendue géographique permet une interconnexion en plusieurs points distants du réseau électrique.

L'architecture selon l'invention permet de conserver une fiabilité et une résilience élevées du réseau électrique existant tout en élargissant sa capacité à intégrer de grandes quantités d'énergie renouvelable (EnR) à l'avenir par le biais des installations linéaires PV.

Au final, une architecture selon l'invention présente de nombreux avantages parmi lesquels on peut citer :
- du fait du choix des installations linéaires,
   une réduction considérable de l'occupation du sol ainsi qu'une réduction de construction de lignes HVAC ;
   une augmentation de la capacité de pénétration des systèmes PV au réseau électrique AC existant ;
   une réduction de la variation de production PV à cause d'intermittence grâce à l'agrégation des installations linéaire sur une grande distance ;
- l'amélioration de la flexibilité du réseau, par la possibilité d'échanger de l'énergie dans les deux sens entre un réseau DC et un réseau AC ;
- une grande fiabilité et résilience ;
- une amélioration de la stabilité du réseau AC ;
- la possibilité de maintien de continuité de service en cas de défaut ou de séparation du réseau AC ;
- une simplification de la gestion énergétique ;
- une facilité à connecter des systèmes DC comme les stockages ou/et des stations de recharge rapide à grande puissance pour les VE ou/et des électrolyseurs et des piles à combustible au réseau DC des installations linéaires ;
- la possibilité de couplage avec des fermes éoliennes offshore ou on-shore...
- la possibilité d'une protection efficace enter un réseau AC et un réseau DC ;
- la diminution de pertes totales du réseau AC par la répartition optimale de puissance. D'autres avantages et caractéristiques de l'invention ressortiront mieux à la lecture de la description détaillée d'exemples de mise en oeuvre de l'invention faite à titre illustratif et non limitatif en référence aux figures suivantes.

### Brève description des dessins

[Fig 1] la figure 1 illustre schématiquement une architecture électrique selon l'invention telle qu'elle pourrait être implantée dans la région sud-Est de la France.
[Fig 2] la figure 2 est une vue synoptique de l'architecture électrique selon l'invention.
[Fig 3] la figure 3 est une vue schématique illustrant une architecture selon l'invention restreinte à deux connexions par convertisseurs VSC entre le réseau DC et le réseau AC.
[Fig 4] la figure 4 est une vue schématique du réseau test « New-England IEEE 39 noeuds » sur lequel les tests d'injection de puissance du réseau DC selon l'architecture électrique de l'invention ont été réalisés.

### Description détaillée

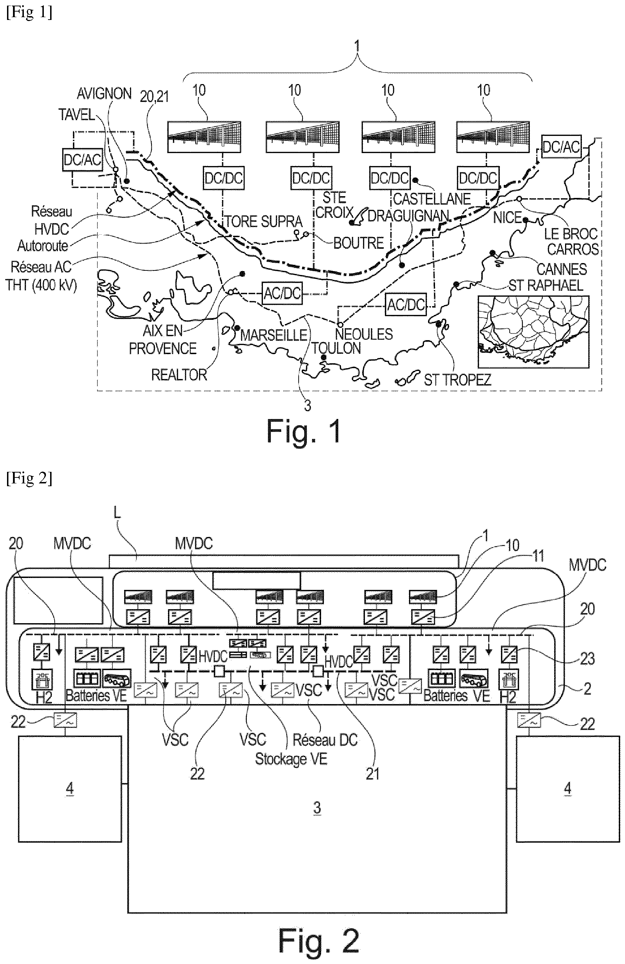

La figure 1 montre une architecture selon l'invention telle qu'elle pourrait être implantée dans la région sud-Est de la France.

Comme illustré, cette architecture électrique comprend une pluralité 1 de groupes de panneaux photovoltaïques (PV) 10, adaptés pour produire une puissance totale maximale P. Ces groupes de panneaux 10 sont répartis sur des centaines de kilomètre dans cette région en étant agencés sur des surfaces au sol allongées sur des terrains déjà construits par l'homme, tels que le long des bordures de chemin de fer, des autoroutes...

Tous ces groupes de panneaux sont connectées en parallèle électrique par à au moins un bus 20, 21 d'un réseau de courant continu (DC) 2, pour former une seule installation PV linéaire. Cette installation PV linéaire est elle-même connectée au réseau de transport 3 et/ou de distribution 4 alternatif (AC) déjà existant dans cette région. Tous les groupes de panneaux PV sont donc connectés entre eux par au moins un bus DC 20, 21.La figure 2 montre plus en détail les composants et les modes de connexions possibles selon un mode de réalisation d'une telle architecture.

Sur cette figure 2, les groupes de panneaux PV sont répartis le long d'une ligne L au sol. La pluralité 1 de ces groupes PV peut produire une puissance totale maximale P.

L'installation PV linéaire comprend la pluralité des groupes panneaux 10 ainsi que le réseau DC 2, qui comprend ici plusieurs bus MVDC 20 auxquels sont connectées en parallèle électrique les groupes de panneaux 10, chacune par l'intermédiaire d'un convertisseur DC/DC 11.

Le réseau DC comprend également plusieurs bus HVDC 21 au sein de l'installation PV linéaire, connectés chacun à un ou plusieurs des bus MVDC 20. Les bus HVDC 21 peuvent transporter le courant continu sur l'ensemble du réseau DC.

Chaque bus MVDC 20 ou bus HVDC 21 de l'installation linéaire est relié à un noeud d'un réseau de transport AC 3 ou à celui d'un réseau de distribution AC par l'intermédiaire d'un convertisseur en source de tension 22.

De préférence, les convertisseurs VSC 22 sont des convertisseurs modulaires multiniveaux (MMC).

Selon l'invention, chacun des convertisseurs VSC 22 est adapté pour injecter de 0 à 100% de la puissance P dans le réseau AC.

Selon l'invention également, un système de contrôle de l'architecture peut répartir l'injection de puissance entre tous les convertisseurs VSC 22 en fonction des besoins et/ou des régimes de fonctionnement du réseau AC, de sorte à réduire les pertes totales de ce dernier et améliorer la qualité de service sur ce dernier.

Comme illustré également sur cette figure 2, le réseau DC de l'architecture comprend plusieurs charges réparties géographiquement, telles que des stations de recharge de véhicules électriques (VE) à grande puissance ou des électrolyseurs (H₂) pour véhicules à hydrogène. Chacun de ces charges est reliée directement au bus MVDC 20 par l'intermédiaire d'un convertisseur DC/DC 23.

Le réseau DC peut supporter également plusieurs moyens de stockage électrique répartis géographiquement, tels que des batteries. Chaque moyen de stockage est relié également directement au bus MVDC 20 par l'intermédiaire d'un convertisseur DC/DC 23.

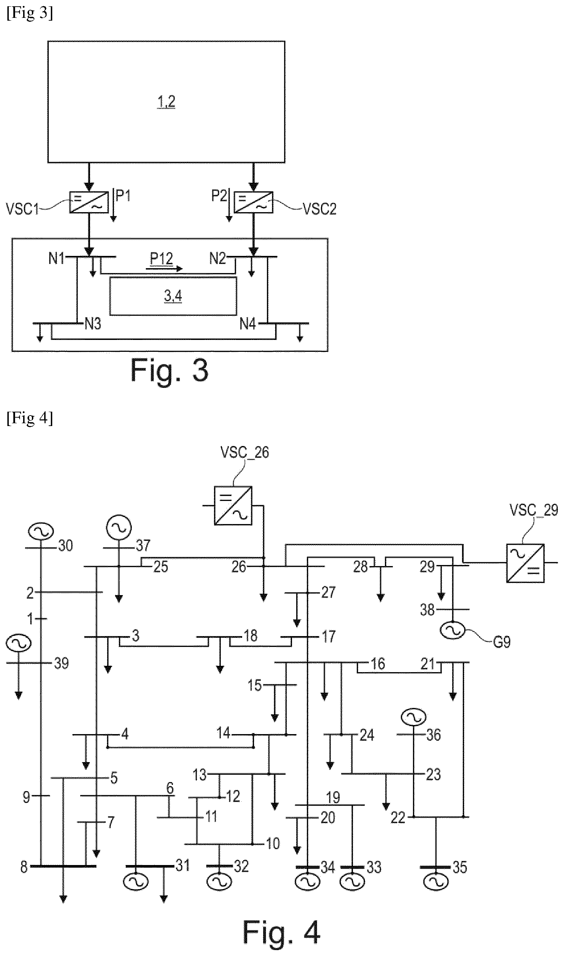

Pour illustrer le fonctionnement de l'architecture selon l'invention, la figure 3 montre seulement deux convertisseurs VSC 22 qui réalisent le couplage entre le réseau DC de l'installation linéaire, connecté à la pluralité 1 de groupes PV 10 et le réseau AC 3, 4. Plus précisément, le réseau AC schématiquement comprend quatre noeuds N1 à N4, le noeud N1 étant le noeud de couplage du convertisseur VSC 21, le noeud N2 étant le noeud de couplage du convertisseur VSC 22.

Dans cette configuration, la puissance injectée par chacun des convertisseurs VSC1 et VSC2 est en fonction du besoin du réseau AC. La puissance de transit P12 entre N1 et N2 est dans le sens de la flèche indiqué que la figure 3. Si la ligne entre N1 et N2 est très chargée, il y a un risque de surcharge.

Dans ce cas, selon l'invention, le système de contrôle de l'architecture peut réduire la puissance injectée P1 au niveau de VSC1 et augmenter la puissance injectée P2 au niveau de VSC2 afin de réduire la surcharge de la ligne N1-N2. Ce système de contrôle est de façon préférentielle celui intégré à l'installation PV linéaire et qui pilote le fonctionnement de l'installation PV linéaire. Cela a l'avantage d'une autonomie locale d'arbitrage des puissances injectées P1 et P2.

De façon alternative, il pourra s'agir d'un système de contrôle externe à l'installation PV linéaire, par exemple en lien avec le système SCADA de régulation du réseau AC.

De manière générale, la puissance entre P1 et P2 peut être ajustée, afin de réduire les pertes totales du réseau AC, ou améliorer sa qualité de service.

Des validations de l'architecture proposée selon l'invention ont été faites sur le réseau AC de transport test IEEE New-England 39 noeuds. Ce réseau AC, schématisé en figure 4, est une simplification du réseau de New-England dans le nord-est américain. Il comporte 39 noeuds, dont 10 noeuds de production (numérotés de 30 à 39) et 46 lignes. En particulier, au noeud 29, il y a un générateur G9.

La production et la consommation totales du réseau AC New-England sont respectivement de 6147 MW et 6097 MW.

Les validations effectuées sur ce réseau New-England sont faites avec le logiciel commercialisé sous la dénomination « Powerfactory » par la société Digsilent.

Les hypothèses de test de validation sont faites en considérant un nombre de six groupes de panneaux PV tous reliés en parallèle électrique à un bus DC de l'installation linéaire PV. La puissance maximale de chaque groupe PV est de 50 MW, soit une puissance totale maximale P de 300 MW de l'installation linéaire.

Le bus DC est relié à deux convertisseurs VSC qui sont connectés au réseau New-England AC aux noeuds 26 et 29, référencés respectivement VSC_26 et VSC_29.

Autrement dit, dans les tests, ces deux convertisseurs VSC, VSC_26 et VSC_29, assurent l'injection de production des six groupes PV au réseau New-England AC.

Le synoptique de la configuration de test est montré à la figure 4.

Pour les tests, la puissance de ces deux VSC est variable comme une injection arbitraire, en fonction de besoins et/ou de régime de fonctionnement du réseau AC.

Plus précisément, pour voir l'impact de répartition optimale de puissances entre les deux VSC_26 et VSC_29, 5 cas ont été testé en fonction de la puissance de production du générateur G9.

Pour chacun de ces 5 cas, les deux VSC_26 et VSC_29 assurent à eux l'injection de la puissance totale maximale P. Pour chacun des cas, pour réduire le transit de puissance sur les lignes 29-26 et 29-28, tout ou partie de la puissance P est injectée aux deux VSC_26 et VSC_29 et les pertes totales du réseau AC sont évaluées.

D'un cas à l'autre, on fait donc évoluer la puissance injectée à chacun des deux VSC_26 et VSC_29, respectivement notées P_VSC_26 et P_VSC_29 en fonction de la puissance de production du générateur G9 (P_G9).

Le tableau 1 ci-dessous synthétise tous les cas, numérotés 1 à 5, les puissances et les pertes évaluées, avec une puissance totale du système PV linéaire de 300 MW.

**[Tableau 1]**

| **Cas** | **P_G9 (MW)** | **P_VSC_26 (MW)** | **P_VSC_29 (MW)** | **Pertes (MW)** |
|---|---|---|---|---|
| Cas 1 | 730 | 300 | 0 | 57.53 |
| Cas 2 | 630 | 200 | 100 | 51.26 |
| Cas 3 | 530 | 100 | 200 | 48.7 |
| Cas 4 | 430 | 0 | 300 | 50.2 |
| Cas 5 | 430 | 270 | 30 | 44.16 |

De ce tableau 1, il ressort que :
- le cas 5 est celui où les pertes totales sont minimales ;
- les pertes totales sont diminuées d'environ 23% du cas 1 au cas 5 ;
- avec une répartition optimale de puissance injectée entre les deux VSC, P_VSC_26 et P_VSC_29, on peut réduire de manière optimale les pertes sur le réseau AC.

Par conséquent, ces tests montrent que si la répartition de puissance injectée sur les différents points de couplage VSC entre le réseau DC de l'installation linéaire PV, connecté à une pluralité de groupe de panneaux PV en parallèle électrique et un réseau AC est optimale, les pertes totales sur le réseau AC réduire.

L'invention n'est pas limitée aux exemples qui viennent d'être décrits ; on peut notamment combiner entre elles des caractéristiques des exemples illustrés au sein de variantes non illustrées.

D'autres variantes et modes de réalisation peuvent être envisagés sans pour autant sortir du cadre de l'invention.

### Liste des références citées

[1]: T. Athay, R. Podmore, and S. Virmani. "A Practical Method for the Direct Analysis of Transient Stability". In: IEEE Transactions on Power Apparatus and Systems PAS-98 (2 Mar. 1979), pp. 573-584.
[2]: M. A. Pai. "Energy function analysis for power system stability". The Kluwer international series in engineering and computer science. Power electronics and power systems. Boston: Kluwer Academic Publishers, 1989.

## Revendications

1. Architecture électrique comprenant :
- au moins une installation linéaire comprenant au moins un groupe de panneaux photovoltaïques (PV) (10) adapté pour produire une puissance totale maximale P, et un réseau de courant continu (DC) (2) comprenant au moins un bus (20, 21) auquel sont connectés en parallèle électrique le(s) groupe(s) de panneaux PV par l'intermédiaire chacun d'un convertisseur DC/DC (11),
- un réseau de transport (3) et/ou de distribution (4) alternatif (AC),
- au moins deux convertisseurs en source de tension (22) (VSC), un des deux convertisseurs reliant le bus DC à un premier noeud du réseau AC, l'autre des deux convertisseurs reliant le bus DC à un deuxième noeud du réseau AC, distinct du premier noeud, chacun des convertisseurs VSC étant adapté pour injecter de 0 à 100% de la puissance P dans le réseau AC,
- un système de contrôle adapté pour répartir l'injection de puissance entre les convertisseurs VSC en fonction des besoins et/ou des régimes de fonctionnement du réseau AC, de sorte à réduire les pertes totales de ce dernier et/ou d'améliorer la qualité de service du réseau AC.

2. Architecture selon la revendication 1, les convertisseurs VSC étant des convertisseurs modulaires multiniveaux (MMC).

3. Architecture selon la revendication 1 ou 2, les convertisseurs étant contrôlés selon un mode de contrôle de puissance injectée et de la tension au point de connexion du réseau (P-Vac : AC) ou selon un mode de contrôle de puissance active et réactive injectées au réseau AC (P-Q).

4. Architecture selon l'une des revendications précédentes, le bus (20) auquel sont directement connectés en parallèle électrique le(s) groupe(s) de panneaux PV étant un bus de moyenne tension en courant continu (MVDC).

5. Architecture selon la revendication 4, comprenant plusieurs charges réparties géographiquement, telles que des stations de recharge de véhicules électriques à grande puissance ou des électrolyseurs pour l'alimentation de véhicules fonctionnant à l'hydrogène, reliées chacune par l'intermédiaire d'un convertisseur DC/DC (23) au bus MVDC.

6. Architecture selon la revendication 4 ou 5, comprenant plusieurs moyens de stockage électrique répartis géographiquement, tels que des batteries, reliés chacun par l'intermédiaire d'un convertisseur DC/DC (23) au bus MVDC.

7. Architecture selon l'une des revendications 4 à 6, comprenant d'autres sources de courant réparties géographiquement, telles que des éoliennes, reliées chacune par l'intermédiaire d'un convertisseur DC/DC (23) au bus MVDC.

8. Architecture selon l'une des revendications 4 à 7, le réseau DC de l'installation linéaire comprenant au moins un bus de haute tension en courant continu (HVDC) relié au bus de moyenne tension en courant continu (MVDC) et à un convertisseur en source de tension (22) (VSC) relié à un noeud du réseau AC.

9. Architecture selon l'une des revendications précédentes, le système de contrôle étant connecté au système de contrôle et d'acquisition de données en temps réel (SCADA) du réseau AC.

10. Architecture selon l'une des revendications précédentes, comprenant des moyens de mesure de tension et/ou de fréquence aux premier et deuxième noeuds, reliés au système de contrôle de sorte que qu'il répartisse l'injection de puissance entre les convertisseurs VSC en fonction des mesures effectuées.
